# FASCICULE DE BREVET EUROPEEN

(11) **EP 2 218 300 B1**
(45) Date de publication et mention de la délivrance du brevet: **24.06.2015**
(21) Numéro de dépôt: 08871853.1
(22) Date de dépôt: 14.11.2008
(51) Int. Cl.: H05B 3/00, F27B 9/06, H05B 3/40, H05B 3/02

(54) **DISPOSITIF DE TRAITEMENT THERMIQUE DE SOLIDES DIVISES**
VORRICHTUNG ZUR WÄRMEVERARBEITUNG VON GETEILTEN FESTSTOFFEN
DEVICE FOR THE THERMAL PROCESSING OF DIVIDED SOLIDS

(30) Priorité: 23.11.2007 FR 0708205
(43) Date de publication de la demande: 18.08.2010
(73) Titulaire: E.T.I.A.-Evaluation Technologique, Ingenierie et Applications, 60201 Compiegne (FR)
(72) Inventeur: LEPEZ, Olivier, F-60260 Lamorlaye (FR); SAJET, Philippe, F-60610 Lacroix Saint-Ouen (FR)
(74) Mandataire: Jaunez, Xavier
(86) Numéro de dépôt international: PCT/FR2008/001600
(87) Numéro de publication internationale: WO 2009/095564

(56) Documents cités:
- EP-A- 1 211 471
- WO-A-02/065816
- FR-A- 2 892 888
- US-A- 5 289 640
- US-A- 5 869 810

## Description

La présente invention concerne un dispositif de traitement thermique de solides divisés.

### ARRIERE PLAN DE L'INVENTION

Les dispositifs de transfert et de traitement thermique couramment utilisés dans l'industrie comprennent en général un organe de transfert et un moyen chauffant réalisant le traitement thermique.

Dans un premier type de dispositif, l'organe de transfert est une enveloppe tubulaire vibrante recevant les solides divisés. Le traitement thermique est alors assuré par chauffage de l'enveloppe tubulaire. De tels dispositifs sont de mise en oeuvre délicate et sont relativement coûteux.

On connaît un deuxième type de dispositif dans lequel l'organe de transfert est une hélice montée pour tourner autour d'un axe longitudinal dans une enveloppe tubulaire. Le moyen chauffant est alors constitué soit par l'enveloppe, soit par un tube autour duquel s'enroule l'hélice, ledit tube étant parcouru par un fluide porté à une température élevée. Cependant, on s'est aperçu que seuls les solides se trouvant à proximité de l'enveloppe chauffante ou du tube chauffant sont effectivement soumis à un flux thermique efficace, de sorte que le chauffage des solides divisés est incomplet, irrégulier et peu efficace.

Le US-5 289 640 A décrit un dispositif de traitement thermique de solides divisés comportant deux hélices de transfert chauffantes (par circulation interne de liquide dans l'arbre et les spires des hélices), et servant à séparer et évacuer des composants volatils. Il convient de noter que l'enceinte en U et son capotage supérieur sont en acier inoxydable, et que la chaleur est exclusivement apportée par les hélices chauffantes.

Le EP-1 211 471 A1 décrit une enceinte cylindrique en acier inoxydable à vis de transfert de même diamètre, l'enceinte étant agencée dans un four à parois en briques réfractaires et éléments de chauffage par rayonnement. Il convient de noter que la vis de transfert n'est pas chauffante, et que le chauffage par rayonnement est indirect car extérieur à l'enceinte.

Plus récemment, on a proposé un dispositif de traitement thermique de solides divisés, comprenant au moins un organe de transfert ayant un axe longitudinal et une partie hélicoïdale montée pour tourner autour dudit axe longitudinal dans une enveloppe tubulaire, la partie hélicoïdale étant formée dans sa masse d'un matériau électriquement conducteur et étant relié à une source d'alimentation en énergie électrique pour constituer un moyen de transfert chauffant. Un tel dispositif est illustré dans le document WO-A-99/39549 de la demanderesse. Dans ce dispositif, l'enveloppe tubulaire est soit une auge traditionnelle pour un traitement à ciel ouvert, soit une auge cylindrique.

Dans certaines applications, par exemple le ris-solage de légumes ou le braisage de viandes, les produits à traiter doivent être portés d'une température relativement basse à une température assez ou très élevée, par exemple de 20°C à 140°C. Pour de telles applications, la demanderesse a perfectionné le dispositif précité, en agençant au moins une cassette fixée, du côté interne, au capotage de l'enveloppe tubulaire, cette cassette étant équipée d'un ou plusieurs émetteurs de rayonnement infrarouge ou ultraviolet, lesdites cassettes étant en particulier disposées de telle façon que les lampes émettrices équipant les cassettes soient à une distance moyenne de 10 cm à 30 cm de la surface libre de la masse de produit se propageant dans l'enceinte de traitement, le chauffage par rayonnement constituant alors un moyen de chauffage d'appoint particulièrement intéressant pour les applications précitées. On pourra à ce titre se référer au document FR-A-2 892 888 de la demanderesse.

Les agencements précités ne permettent cependant pas d'envisager les traitements de solides divisés à haute température, c'est-à-dire à des températures allant de 300°C à 800°C. De tels traitements sont tout particulièrement intéressants dans le domaine de la torréfaction, de la pyrolyse, ou de la gazéification de déchets végétaux, ou encore dans le domaine de la dévolatilisation de terres polluées aux métaux lourds ou de la dessiccation de boues industrielles ou non.

La limitation précitée est inhérente au fait que, avec un organe de transfert ayant une partie hélicoïdale chauffée par effet Joule, la partie hélicoïdale est dimensionnée pour faire passer la puissance requise, de sorte que l'on est de facto limité pour la surface d'échange disponible qui est en contact avec le produit à traiter.

On connaît par ailleurs des traitements thermiques à haute température procédant d'approches différentes. On peut citer à ce titre l'utilisation d'un désorbeur rotatif à chauffage direct ou indirect, ou à chauffage mixte, pour le traitement de sols pollués, ce qui permet des traitements à des températures atteignant environ 600°C.

### OBJET DE L'INVENTION

La présente invention a pour objet de concevoir un dispositif de traitement thermique mieux adapté aux traitements à haute température, sans pour autant présenter une structure complexe et un coût de fabrication élevé.

### DEFINITION GENERALE DE L'INVENTION

Le problème précité est résolu conformément à l'invention grâce à un dispositif de traitement thermique de solides divisés, comprenant au moins un organe de transfert ayant un axe longitudinal et une partie hélicoïdale montée pour tourner autour dudit axe longitudinal dans une enveloppe tubulaire, ladite partie hélicoïdale étant à surface chauffante pour constituer un moyen de transfert chauffant, ledit dispositif étant remarquable en ce que l'enveloppe tubulaire présente des parois internes en matériau réfractaire, et la partie hélicoïdale de l'organe de transfert est formée dans sa masse d'un matériau électriquement conducteur et est reliée à au moins une source d'alimentation électrique, de sorte que ladite partie hélicoïdale constitue en outre un moyen de chauffage des parois internes à une température suffisante pour que lesdites parois internes constituent elles-mêmes au moins en partie des moyens de chauffage par rayonnement de la masse de solides divisés qui progresse dans ladite enveloppe tubulaire.

Ainsi, les parois internes qui constituent elles-mêmes au moins en partie des moyens de chauffage par rayonnement forment des émetteurs de rayonnement infrarouge de type passif, contrairement aux cassettes à émetteurs de rayonnement infrarouge précédemment utilisées dans le dispositif précité décrit dans le document FR-A-2 892 888, lesquels émetteurs sont alors de type actif, en étant uniquement actionnés à la demande, en cours de traitement, selon le type d'application concerné.

De préférence, les parois internes en matériau réfractaire concernent à la fois la paroi supérieure de capotage, les parois latérales et la paroi inférieure de fond de l'enveloppe tubulaire, de sorte que certaines desdites parois internes constituent également au moins en partie des moyens de chauffage par conduction et/ou convection de la masse de solides divisés circulant dans ladite enveloppe tubulaire. On obtient ainsi un agencement de moyens de chauffage complétant très efficacement le chauffage procuré par la partie hélicoïdale chauffante, ce qui garantit une grande homogénéité du chauffage dans la masse de solides divisés qui progresse dans l'enveloppe tubulaire du dispositif de traitement.

Avantageusement alors, les parois internes en matériau réfractaire concernent toute la longueur de l'enveloppe tubulaire, ainsi que les parois d'extrémité amont et aval de ladite enveloppe tubulaire.

De préférence encore, l'enveloppe tubulaire comporte une enveloppe externe unitaire à section en forme de U, dans laquelle sont disposés des modules en matériau réfractaire juxtaposés bout à bout, également à section en forme de U, chaque module individuel formant ainsi un élément de paroi interne de fond et deux éléments de paroi interne latéraux. En particulier, l'enveloppe tubulaire est recouverte sur toute sa longueur par un capotage constitué par des éléments de paroi supérieure en matériau réfractaire juxtaposés bout à bout, et par des éléments de couverture en matériau isolant thermiquement.

Avantageusement alors, le capotage et le fond de l'enveloppe tubulaire sont équipés d'éléments de cheminée, en matériau réfractaire, destinés à être reliés à des moyens étanches amont d'entrée de produits à traiter et aval de produits traités, et éventuellement aussi à des moyens étanches aval d'évacuation de sous-produits gazeux.

Avantageusement encore, les parois internes de l'enveloppe tubulaire sont toutes réalisées en un matériau qui est à la fois réfractaire et isolant électriquement. Ceci permet en particulier de traiter des produits qui sont conducteurs électriques, par exemple des boues chargées de métaux ou de sels conducteurs, en préchauffant d'abord les parois isolantes au moyen de l'organe de transfert qui est lui-même chauffé par effet Joule, puis, après avoir coupé l'alimentation en énergie électrique, de n'utiliser l'organe de transfert que pour sa seule fonction de transfert des solides divisés, le chauffage étant alors assuré par les seules parois internes préchauffées. L'absence de flux de courant dans la masse de l'organe de transfert évite alors tout risque de court-circuit avec les parties conductrices présentes dans la masse de produit à traiter.

Avantageusement alors, ladite au moins une source d'énergie électrique alimentant l'organe de transfert chauffant est disposée dans un caisson ventilé adjacent à l'enveloppe tubulaire, avec interposition d'une paroi d'isolation thermique.

Il sera dans ce cas intéressant de prévoir que le ou chaque caisson ventilé soit traversé par un arbre entraîné relié coaxialement à l'organe de transfert, ledit arbre entraîné portant des ailettes de refroidissement. En particulier, le ou chaque caisson ventilé est équipé d'un ventilateur latéral disposé pour souffler de l'air froid en direction des ailettes de refroidissement, et présente une fenêtre latérale opposée audit ventilateur. On pourra enfin prévoir que l'arbre entraîné est un arbre creux qui est relié, à l'extérieur du caisson ventilé, à un raccord tournant permettant de faire circuler un fluide de refroidissement à l'intérieur dudit arbre creux.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :

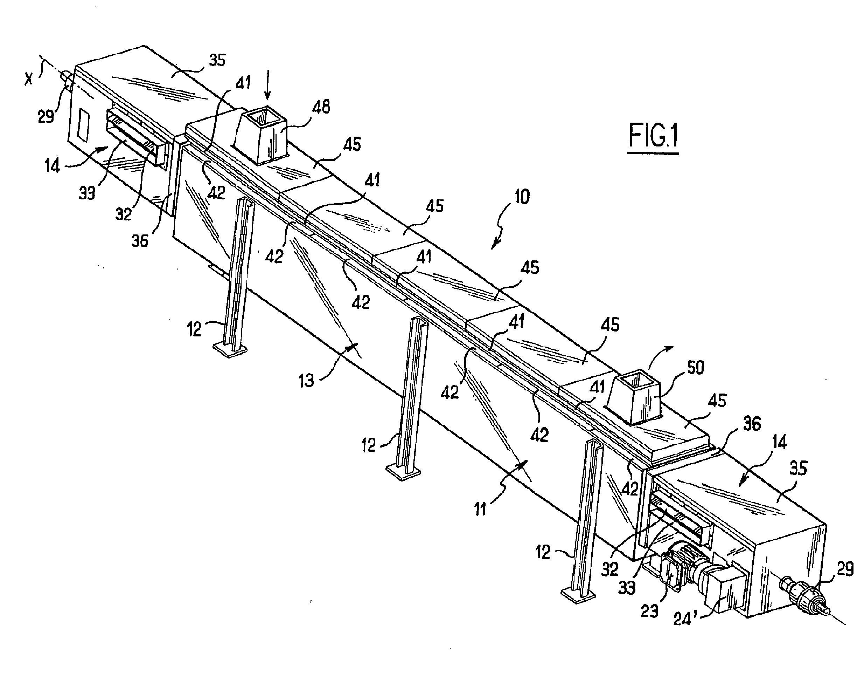

- la figure 1 illustre en perspective un dispositif de traitement thermique conforme à l'invention, avec son capotage, dont l'enveloppe tubulaire est équipée de parois internes en matériau réfractaire ;
- la figure 2 est une vue de dessus du dispositif de la figure 1 ;
- la figure 3 est une coupe selon III-III de la figure 2, permettant de mieux distinguer la partie hélicoïdale de l'organe de transfert du dispositif de traitement, et les parois internes en matériau réfractaire qui équipent l'enveloppe tubulaire dudit dispositif ;
- La figure 4 est une coupe transversale selon IV-IV de la figure 3, permettant de mieux comprendre le mode d'action thermique multiple qui est mis en oeuvre par la présence des parois internes en matériau réfractaire, lesdites parois concernant en l'espèce à la fois la partie supérieure de capotage, les parois latérales et la paroi inférieure de fond de l'enveloppe tubulaire ;
- la figure 5 est une vue éclatée des composants du dispositif de traitement précité (sans la partie hélicoïdale de l'organe de transfert);
- la figure 6 illustre, à plus grande échelle, une partie d'extrémité du dispositif précité, toujours en vue éclatée ; et
- la figure 7 est une vue partielle de dessus de cette extrémité, permettant de mieux distinguer le caisson ventilé, ainsi que les moyens assurant l'entraînement en rotation de l'organe de transfert et l'alimentation de celui-ci en énergie électrique.

### DESCRIPTION DETAILLEE DU MODE DE REALISATION PREFERE

Sur les figures, on distingue un dispositif de traitement thermique noté 10 conforme à l'invention.

Le dispositif 10 comporte une enveloppe tubulaire 11, de direction générale essentiellement horizontale, qui est maintenue à distance du sol par des piètements 12. L'enveloppe tubulaire 11 comporte une enveloppe externe 13, ici unitaire, qui sera par exemple métallique, en particulier réalisée en acier inox amagnétique.

Un caisson 14 est fixé à chacune des extrémités de l'enveloppe tubulaire 11.

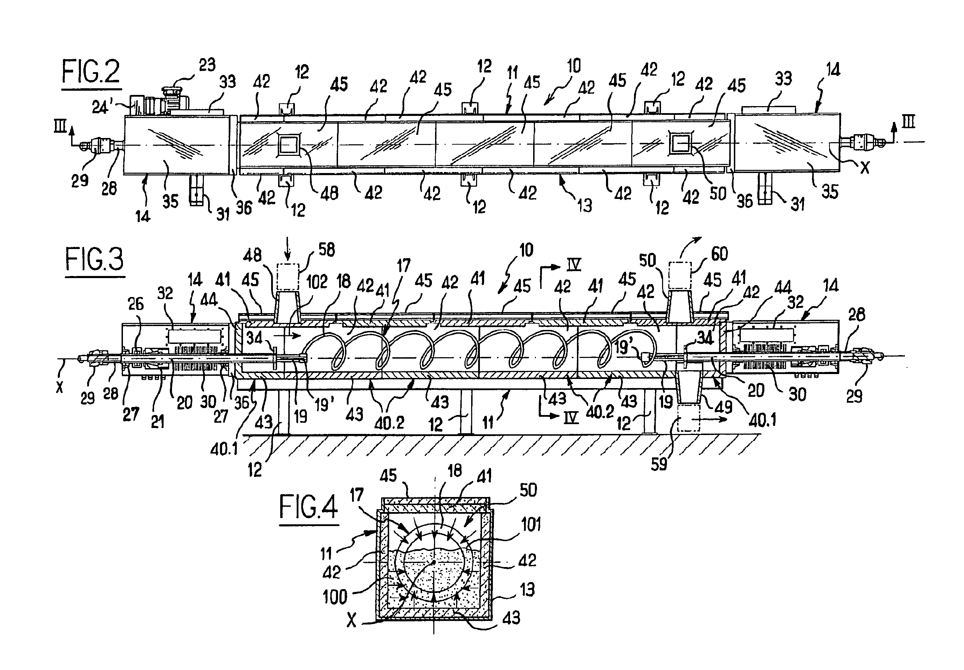

Comme cela est mieux visible sur la figure 3, le dispositif de traitement thermique comprend un organe de transfert 17 ayant un axe longitudinal X et une partie hélicoïdale 18 montée pour tourner autour dudit axe longitudinal dans l'enveloppe tubulaire 11. En l'espèce, la partie hélicoïdale 18 a une forme de serpentin hélicoïdal qui est fixé à ses deux extrémités en bout d'un tronçon d'arbre 19 par une ferrure associée 19', mais ceci ne constitue naturellement qu'un exemple, et l'on pourra utiliser toute autre géométrie de type hélicoïdal. Chaque tronçon d'arbre 19 est relié à son autre extrémité, par le biais d'un collier 34, à un arbre coaxial 20 qui passe dans un caisson d'extrémité 14 associé.

Le ou chaque caisson 14 est équipé de moyens servant à entraîner en rotation l'arbre 20, et par suite l'organe de transfert 17, ainsi que des moyens assurant l'alimentation en énergie électrique dudit arbre 20, et par suite de la partie hélicoïdale 18 de l'organe de transfert 17. La partie hélicoïdale 18 est à surface chauffante, et constitue ainsi un moyen de transfert chauffant. Il est en effet tout particulièrement avantageux de prévoir que cette partie hélicoïdale soit formée dans sa masse d'un matériau électriquement conducteur, comme cela est décrit dans les documents précités de la demanderesse.

Pour l'entraînement en rotation, on utilise un moteur électrique 23 fixé latéralement sur le caisson 14, et dont l'arbre de sortie 24 sert à accrocher une courroie d'entraînement 25 passant sur une poulie 26 fixée sur l'arbre 20. L'arbre 20 passe dans des paliers d'extrémité 27 aux deux extrémités du caisson 14, et son raccordement au tronçon d'arbre 19 de l'organe de transfert 17 est assuré au niveau du collier associé 34. L'arbre entraîné 20 est ici un arbre creux, qui comporte, au-delà de la paroi d'extrémité 37 du caisson 14, une extrémité en saillie 28 se terminant par un raccord tournant 29 permettant ainsi de faire circuler un fluide de refroidissement à l'intérieur de l'arbre creux 20.

Pour ce qui est de l'alimentation en énergie électrique, on constate que l'arbre 20 est rigidement solidaire d'un tambour coaxial 21 en matériau électriquement conducteur, sur lequel frottent des charbons 22 d'amenée du courant électrique, reliés par des fils conducteurs (non représentés ici) à une source d'alimentation en énergie électrique. Pour plus de détails, on pourra se référer au document FR-A-2 892 888 précité de la demanderesse, dans lequel ces moyens d'alimentation en énergie électrique sont décrits en détail.

Comme on le verra par la suite, le traitement thermique envisagé avec le dispositif de l'invention est un traitement à haute température, c'est-à-dire à des températures allant de 300°C à 800°C. Ceci signifie que les caissons 14 doivent être agencés et reliés à l'enveloppe tubulaire 11 de telle façon que la température régnant à l'intérieur desdits caissons soit une température compatible avec les composants qui y sont disposés, en particulier une température de l'ordre de 80°C. Ainsi, la source d'énergie électrique 22 alimentant l'organe de transfert chauffant 17 est disposée dans un caisson ventilé 14, avec interposition d'une épaisse paroi d'isolation thermique 36. On a également prévu en l'espèce des moyens de refroidissement spécifiques, à savoir des ailettes de refroidissement 30 qui sont agencées sur l'arbre 20 passant dans le caisson 14, ainsi qu'un ventilateur latéral 31 fixé latéralement sur une paroi du caisson 14 et disposé pour souffler de l'air froid à l'intérieur dudit caisson en direction des ailettes de refroidissement 30. Le caisson 14 présente latéralement, sur la face qui est opposée au ventilateur latéral 31, une fenêtre latérale 32 bordée extérieurement par un déflecteur 33. A titre de moyen supplémentaire de refroidissement, on pourra utiliser une circulation de fluide à l'intérieur de l'arbre 20, comme indiqué précédemment. Chaque caisson 14 est en outre recouvert par une paroi 35 de capotage. On notera également la présence d'un capotage de protection 24' entourant l'arbre de sortie 24 du moteur 23 et la partie associée de la courroie d'entraînement 25.

Conformément à une caractéristique essentielle de l'invention, l'enveloppe tubulaire 11 présente des parois internes en matériau réfractaire, et la partie hélicoïdale 18 de l'organe de transfert 17 constitue, en plus de ses fonctions de chauffage direct des produits venant à son contact et de transfert longitudinal desdits produits (direction 102 sur la figure 3), un moyen de chauffage de ces parois internes à une température suffisante pour que lesdites parois internes constituent elles-mêmes des moyens de chauffage par rayonnement de la masse de solides divisés qui progresse dans ladite enveloppe tubulaire 11.

On pourrait prévoir que les parois internes destinées à constituer le moyen de chauffage par rayonnement sont limitées à la seule paroi supérieure de capotage, en généralisant ainsi l'usage de cassettes individuelles d'émetteurs infrarouges qui est décrit dans le document FR-A-2 892 888 précité de la demanderesse. Il est cependant particulièrement intéressant de prévoir que les parois internes en matériau réfractaire concernent à la fois la paroi supérieure de capotage, les parois latérales et la paroi inférieure de fond de l'enveloppe tubulaire 11. Ceci correspond à la variante représentée ici, avec des parois internes 41 concernant la paroi supérieure de capotage, des parois internes 42 concernant les parois latérales, et des parois internes 43 concernant la paroi inférieure de fond.

Avec un tel agencement, les parois internes constituent également des moyens de chauffage par conduction et/ou convection de la masse de solides divisés circulant dans l'enveloppe tubulaire 11. En l'espèce, les éléments de paroi 41 concernant la paroi supérieure de capotage sont en outre recouverts par des éléments de couverture 45 en matériau isolant thermiquement.

L'action thermique exercée sur les solides divisés circulant dans l'enveloppe tubulaire 11 sera mieux comprise en se référant à la coupe de la figure 4.

On a représenté sur la figure 4 une masse de solides divisés 100 progressant dans l'enveloppe tubulaire 11, cette masse de solides divisés présentant une surface libre 101 en l'espèce légèrement au-dessus du niveau de l'axe central X de la partie hélicoïdale 18 de l'organe de transfert 17. Les parois internes supérieures 41, qui ont été préalablement chauffées en utilisant le pouvoir chauffant de la partie hélicoïdale 18, en l'espèce un chauffage par effet Joule, constituent elles-mêmes des moyens de chauffage par rayonnement de la masse de solides divisés 100, agissant directement sur la surface libre 101 et sur les produits immédiatement adjacents, comme cela est schématisé par des flèches. De plus, la partie supérieure des parois internes latérales 42 vient compléter pour leur action de chauffage par rayonnement les surfaces rayonnantes associées aux parois internes supérieures 41 précitées. Par ailleurs, la partie inférieure de ces parois latérales internes 42 et la paroi interne de fond 43 constituent également des moyens de chauffage par conduction et/ou convection de la masse de solides divisés circulant dans l'enveloppe tubulaire 11. Il est à noter que la partie supérieure de chacune des spires de la partie hélicoïdale 18, qui est au-dessus de la surface libre 101, exerce une action continue de chauffage sur les parois internes supérieures 41 et la partie supérieure des parois internes latérales 42, en participant ainsi au maintien en température des surfaces rayonnantes que constituent ces parois.

Ainsi, on dispose à la fois d'une surface de contact agrandie pour l'échange thermique direct par conduction ou convection, cette surface de contact correspondant à la fois à la surface de la partie hélicoïdale 18 de l'organe de transfert 17 et aux surfaces des parois internes 42 et 43 contre lesquelles les solides divisés circulent, avec en plus un chauffage par rayonnement pur réalisé par les parois internes 41, et par la partie supérieure des parois latérales 42.

La conjonction de ces moyens permet de mettre en oeuvre des traitements thermiques à haute température, c'est-à-dire à des températures atteignant couramment 800°C. Il pourra en particulier s'agir de torréfaction, de pyrolyse, ou de gazéification de déchets végétaux, ou encore de dévolatilisation de terres polluées aux métaux lourds, ou de dessiccation de boues industrielles ou non.

On pourrait imaginer des zones partielles équipées de parois internes constituant des moyens de chauffage par rayonnement, mais il est naturellement plus intéressant en termes d'efficacité et de rendement, de prévoir que les parois internes 41, 42, 43 en matériau réfractaire concernent toute la longueur de l'enveloppe tubulaire 11, ainsi que des parois d'extrémité amont et aval 44 de ladite enveloppe tubulaire.

Du fait que la partie hélicoïdale 18 de l'organe de transfert 17 est formée dans sa masse d'un matériau électriquement conducteur, et est relié à au moins une source d'alimentation en énergie électrique, il faudra prévoir que les parois internes 41, 42, 43, 44 précitées de l'enveloppe tubulaire 11 sont toutes réalisées en un matériau qui est à la fois réfractaire et isolant électriquement. Il pourra par exemple s'agir d'un béton réfractaire ou d'un matériau céramique tel que ceux couramment utilisés pour réaliser des parois de fours.

On constate également que le capotage 41, 45 et le fond 43 de l'enveloppe tubulaire 11 sont équipés d'éléments de cheminée 48, 49, 50 en matériau réfractaire. Ces éléments de cheminées sont destinés à être reliés respectivement à des moyens étanches amont 58 d'entrée de produit à traiter et aval 59 de produit traité, et éventuellement aussi à des moyens étanches aval 60 d'évacuation de sous-produits gazeux. Les moyens étanches amont et aval 58, 59 précités, représentés de façon très schématiques sur la figure 3, pourront être réalisés sous forme d'écluses étanches, comme cela est décrit très en détail dans le document FR-A-2 892 888 précité de la demanderesse. Le moyen étanche aval d'évacuation de sous-produits gazeux 60 aura quant à lui une vanne de type classique, pilotée en fonction de l'échappement des sous-produits concernés. La nature des sous-produits gazeux concernés dépendra du type de traitement concerné : il pourra s'agir de gaz de pyrolyse, de fumées, de vapeur d'eau, ou de métaux lourds, selon le cas.

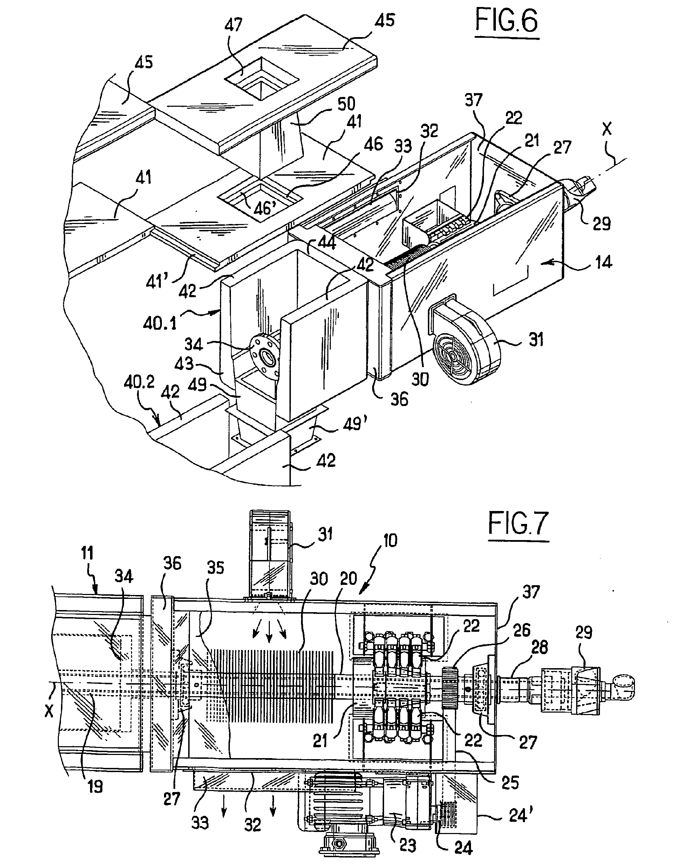

Les éléments de cheminée 48, 50 seront de préférence réalisés en matériau réfractaire de même nature que celui des parois internes 41, lesdits éléments étant mis en place au niveau d'ouvertures 46 agencées avec une feuillure de support 46' mieux visibles sur la figure 6. Les éléments de capotage isolants thermiquement 45 correspondants présenteront également une ouverture de passage 47 associée au passage des éléments de cheminée. En partie basse, l'élément de cheminée 49, également en matériau réfractaire, présente en l'espèce un capotage périphérique 49'.

En l'espèce, l'enveloppe tubulaire 11 est ainsi recouverte sur toute sa longueur par un capotage constitué par des éléments de paroi supérieure 41 en matériau réfractaire juxtaposés bout à bout, et par des éléments de couverture 45 en matériau isolant thermiquement, par exemple en laine de roche. Comme cela est mieux visible sur la figure 6, on constatera que les éléments de paroi supérieure 41 présentent des feuillures d'extrémité 41' permettant un emboîtement avec l'élément de paroi adjacent en vue d'une meilleure étanchéité thermique.

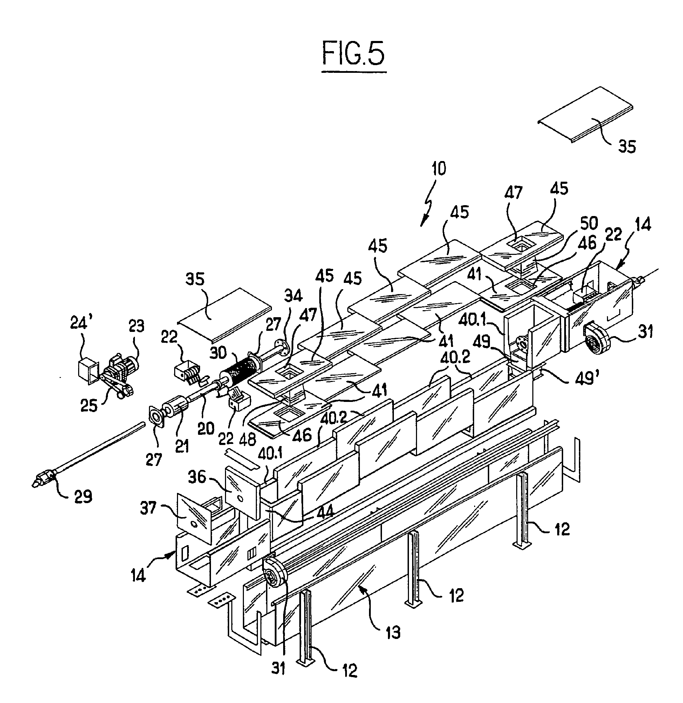

Plus généralement pour la structure, et ainsi que cela est mieux visible sur les figures 5 et 6, il est intéressant de prévoir que l'enveloppe tubulaire 11 comporte une enveloppe externe 13 unitaire à section en forme de U, en particulier une enveloppe métallique en acier inoxydable amagnétique, dans laquelle sont disposés des modules en matériau réfractaire juxtaposés bout à bout, également à section en forme de U. On a noté 40.1 les deux modules d'extrémité, entre lesquels on trouve une pluralité de modules centraux 40.2, ici au nombre de quatre. Chaque module individuel 40.1 ou 40.2 forme ainsi un élément de paroi interne de fond 43 et deux éléments de paroi interne latéraux 42. Un tel mode de réalisation simplifie considérablement l'organisation des parois internes, en évitant d'avoir à fixer entre eux des éléments de paroi plans individuels. De plus, un tel agencement modulaire facilite la mise en place des parois internes en matériau réfractaire dans l'enveloppe externe, et permet aussi le remplacement limité à un seul module (par exemple de 50 cm de long) en cas de fissuration d'une paroi interne.

Le dispositif de traitement thermique qui vient d'être décrit ouvre la voie à de nombreuses utilisations.

On pourra citer par exemple la torréfaction de déchets végétaux dans le cadre de la fabrication de bio-carburants, ou de bois pour constituer des chips d'aromatisation du vin. On peut également citer la pyrolyse de déchets végétaux pour des liquides servant à réaliser des bio-huiles, ou encore des cokes ou des gaz incombustibles. Les déchets végétaux sont par exemple des herbes, des graines ou des tourteaux. On peut également citer des traitements de gazéification de déchets végétaux pour réaliser des gaz combustibles, et aussi des traitements de dévolatilisation de terres polluées, en particulier aux métaux lourds, ainsi que la dessiccation de boues industrielles ou non, en vue de la valorisation d'extraits secs. Pour ce qui est des traitements des boues, on vise tout particulièrement les boues provenant de stations d'épuration, afin d'en retirer les formes pathogènes.

On peut également envisager d'autres types de traitements qui étaient jusque-là inenvisageables avec des vis chauffantes par effet Joule du type précité. En effet, dans le cas de produits qui sont électriquement conducteurs, par exemple des boues chargées de métaux ou de sels conducteurs, la présence de ces particules électriquement conductrices risque de créer des courts-circuits lorsqu'elles s'approchent des parois de la vis chauffante par effet Joule. Or, le dispositif de traitement thermique qui vient d'être décrit permet justement le traitement de tels produits, en préchauffant préalablement les parois internes en matériau réfractaire grâce à l'utilisation de la vis chauffante, et seulement de celle-ci à l'exclusion en particulier de toute résistance chauffante interne aux parois (comme c'est couramment le cas dans la technologie des fours), après quoi on peut couper l'alimentation en énergie électrique pour ne retenir que la fonction classique de transfert de l'organe de transfert. Le chauffage des produits à traiter est alors exclusivement assuré par les parois internes de l'enveloppe tubulaire, avec un chauffage par rayonnement, et un chauffage par conduction et/ou convection.

On pourra également prévoir un pilotage de l'alimentation électrique afin de réaliser un processus de traitement optimisé. Dans tous les cas, on pourra réguler l'organe de transfert (en courant et en rotation) en fonction de la température des parois internes en céramique et/ou de la température des produits et/ou de la température de l'atmosphère régnant dans l'enceinte de traitement.

On pourra enfin organiser un traitement thermique en atmosphère contrôlée, en prévoyant des moyens de gestion et de pilotage de l'atmosphère régnant à l'intérieur de l'enveloppe tubulaire, par exemple pour maintenir la teneur en oxygène en dessous d'un seuil qui entraînerait un risque d'inflammation des produits en cours de traitement.

On est ainsi parvenu à réaliser un dispositif de traitement thermique à haute température qui est à la fois simple, polyvalent et peu encombrant, et aussi faiblement consommateur d'énergie, tout en permettant des traitements très variés.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif de traitement thermique de solides divisés, comprenant au moins un organe de transfert (17) ayant un axe longitudinal (X) et une partie hélicoïdale (18) montée pour tourner autour dudit axe longitudinal dans une enveloppe tubulaire (11), ladite partie hélicoïdale (18) étant à surface chauffante pour constituer un moyen de transfert chauffant, **caractérisé en ce que** l'enveloppe tubulaire (11) présente des parois internes (41, 42) en matériau réfractaire, et la partie hélicoïdale (18) de l'organe de transfert (17) est formée dans sa masse d'un matériau électriquement conducteur et est reliée à au moins une source d'alimentation en énergie électrique, de sorte que ladite partie hélicoïdale constitue en outre un moyen de chauffage des parois internes (41, 42) à une température suffisante pour que lesdites parois internes constituent elles-mêmes au moins en partie des moyens de chauffage par rayonnement de la masse de solides divisés qui progresse dans ladite enveloppe tubulaire (11).

2. Dispositif selon la revendication 1, **caractérisé en ce que** les parois internes (41, 42, 43) en matériau réfractaire concernent à la fois la paroi supérieure de capotage (41), les parois latérales (42) et la paroi inférieure de fond (43) de l'enveloppe tubulaire (11), de sorte que certaines desdites parois internes constituent également au moins en partie des moyens de chauffage par conduction et/ou convection de la masse de solides divisés circulant dans ladite enveloppe tubulaire.

3. Dispositif selon la revendication 1 ou la revendication 2, **caractérisé en ce que** les parois internes (41, 42, 43) en matériau réfractaire concernent toute la longueur de l'enveloppe tubulaire (11), ainsi que les parois d'extrémité amont et aval (44) de ladite enveloppe tubulaire.

4. Dispositif selon l'une des revendications 1 à 3, **caractérisé en ce que** l'enveloppe tubulaire (11) comporte une enveloppe externe (13) unitaire à section en forme de U, dans laquelle sont disposés des modules en matériau réfractaire (40.1, 40.2) juxtaposés bout à bout, également à section en forme de U, chaque module individuel formant ainsi un élément de paroi interne de fond (43) et deux éléments de paroi interne latéraux (42).

5. Dispositif selon la revendication 4, **caractérisé en ce que** l'enveloppe tubulaire (11) est recouverte sur toute sa longueur par un capotage constitué par des éléments de paroi supérieure (41) en matériau réfractaire juxtaposés bout à bout, et par des éléments de couverture (45) en matériau isolant thermiquement.

6. Dispositif selon les revendications 4 et 5, **caractérisé en ce que** le capotage (41, 45) et le fond (43) de l'enveloppe tubulaire (11) sont équipés d'éléments de cheminée (48, 49, 50), en matériau réfractaire, destinés à être reliés à des moyens étanches amont (58) d'entrée de produits à traiter et aval (59) de produits traités, et éventuellement aussi à des moyens étanches aval (60) d'évacuation de sous-produits gazeux.

7. Dispositif selon l'une des revendications 1 à 6, **caractérisé en ce que** les parois internes (41, 42, 43, 44) de l'enveloppe tubulaire (11) sont toutes réalisées en un matériau qui est à la fois réfractaire et isolant électriquement.

8. Dispositif selon la revendication 7, **caractérisé en ce que** ladite au moins une source d'énergie électrique (22) alimentant l'organe de transfert chauffant (17) est disposée dans un caisson ventilé (14) adjacent à l'enveloppe tubulaire (11), avec interposition d'une paroi d'isolation thermique (36).

9. Dispositif selon la revendication 8, **caractérisé en ce que** le ou chaque caisson ventilé (14) est traversé par un arbre entraîné (20) relié coaxialement à l'organe de transfert (17), ledit arbre entraîné (20) portant des ailettes de refroidissement (30).

10. Dispositif selon la revendication 9, **caractérisé en ce que** le ou chaque caisson ventilé (14) est équipé d'un ventilateur latéral (31) disposé pour souffler de l'air froid en direction des ailettes de refroidissement (30), et présente une fenêtre latérale (32) opposée audit ventilateur.

11. Dispositif selon la revendication 9, **caractérisé en ce que** l'arbre entraîné (20) est un arbre creux qui est relié, à l'extérieur du caisson ventilé (14), à un raccord tournant (29) permettant de faire circuler un fluide de refroidissement à l'intérieur dudit arbre creux.

## Patentansprüche

1. Vorrichtung zur Wärmebehandlung von geteilten Feststoffen, umfassend mindestens ein Förderorgan (17), das eine Längsachse (X) und einen spiralförmigen Teil (18) hat, der drehbar um die genannte Längsachse in der rohrförmigen Umhüllung (11) gelagert ist, wobei der spiralförmige Teil (18) zu einer beheizbaren Oberfläche gehört, um ein beheizbares Fördermittel zu bilden, **dadurch gekennzeichnet, dass** die rohrförmige Umhüllung (11) Innenwände (41, 42) aus feuerfestem Material aufweist und der spiralförmige Teil (18) des Förderelements (17) in seiner Masse aus einem elektrisch leitenden Material gebildet und an mindestens eine Quelle zur Versorgung mit elektrischer Energie angeschlossen ist, so dass der spiralförmige Teil ferner ein Heizmittel zum Erwärmen der Innenwände (41, 42) auf eine Temperatur bildet, die ausreicht, damit diese Innenwände selbst zumindest teilweise Strahlungsheizmittel für die Masse aus geteilten Feststoffen bilden, die sich in der rohrförmigen Umhüllung (11) vorwärtsbewegt.

2. Vorrichtung nach Anspruch 1, **dadurch gekennzeichnet, dass** die Innenwände (41, 42, 43) aus feuerfestem Material gleichzeitig die obere Abdeckungswand (41), die Seitenwände (42) und die untere Bodenwand (43) der rohrförmigen Umhüllung (11) betreffen, so dass einige der genannten Innenwände zumindest teilweise gleichermaßen Heizmittel mittels Leitung und/oder Konvektion für die Masse aus geteilten Feststoffen bilden, die in der genannten rohrförmigen Umhüllung zirkuliert.

3. Vorrichtung nach Anspruch 1 oder Anspruch 2, **dadurch gekennzeichnet, dass** die Innenwände (41, 42, 43) aus feuerfestem Material die gesamte Länge der rohrförmigen Umhüllung (11) sowie die stromaufwärtige und die stromabwärtige Endwand (44) der genannten rohrförmigen Umhüllung betreffen.

4. Vorrichtung nach einem der Ansprüche 1 bis 3, **dadurch gekennzeichnet, dass** die rohrförmige Umhüllung (11) eine einstückige äußere Umhüllung (13) mit einem U-förmigen Querschnitt umfasst, in der Module (40.1, 40.2) aus feuerfestem Material, die ebenfalls einen U-förmigen Querschnitt haben, stumpf aneinandergereiht angeordnet sind, wobei jedes einzelne Modul somit ein Bodeninnenwandelement (43) und zwei seitliche Innenwandelemente (42) bildet.

5. Vorrichtung nach Anspruch 4, **dadurch gekennzeichnet, dass** die rohrförmige Umhüllung (11) über ihre gesamte Länge von einer Abdeckung bedeckt ist, die aus oberen Wandelementen (41) aus feuerfestem Material gebildet ist, die stumpf aneinandergereiht sind, sowie aus Abdeckelementen (45) aus wärmedämmendem Material.

6. Vorrichtung nach den Ansprüchen 4 und 5, **dadurch gekennzeichnet, dass** die Abdeckung (41, 45) und der Boden (43) der rohrförmigen Umhüllung (11) mit Kaminelementen (48, 49, 50) aus feuerfestem Material ausgestattet sind, die dazu bestimmt sind, mit einem stromaufwärtigen dichten Mittel (58) zum Einlass von zu behandelnden Produkten und einem stromabwärtigen Mittel (59) für behandelte Produkte und möglicherweise auch mit stromabwärtigen dichten Mitteln (60) zum Ableiten gasförmiger Nebenprodukte verbunden zu werden.

7. Vorrichtung nach einem der Ansprüche 1 bis 6, **dadurch gekennzeichnet, dass** die Innenwände (41, 42, 43) der rohrförmigen Umhüllung (11) alle aus einem Material hergestellt sind, das feuerfest und elektrisch nichtleitend zugleich ist.

8. Vorrichtung nach Anspruch 7, **dadurch gekennzeichnet, dass** die genannte mindestens eine Quelle (22) elektrischer Energie, die das beheizbare Förderorgan (17) versorgt, in einem belüfteten Kasten (14) angeordnet ist, der an die rohrförmige Umhüllung (11) angrenzt, wobei dazwischen eine Wärmedämmungswand (36) angeordnet ist.

9. Vorrichtung nach Anspruch 8, **dadurch gekennzeichnet, dass** der oder jeder belüftete Kasten (14) von einer getriebenen Welle (20) durchsetzt ist, die koaxial mit dem Förderorgan (17) verbunden ist, wobei die getriebene Welle (20) Kühlrippen (30) trägt.

10. Vorrichtung nach Anspruch 9, **dadurch gekennzeichnet, dass** der oder jeder belüftete Kasten (14) mit einem seitlichen Ventilator (31) ausgestattet ist, der angeordnet ist, um Kaltluft in Richtung der Kühlrippen (30) zu blasen, und ein seitliches Fenster (32) aufweist, das dem Ventilator entgegengesetzt ist.

11. Vorrichtung nach Anspruch 9, **dadurch gekennzeichnet, dass** die getriebene Welle (20) eine Hohlwelle ist, die außerhalb des belüfteten Kastens (14) mit einer Drehverbindung (29) verbunden ist, die ein Zirkulieren eines Kühlfluids im Inneren der genannten Hohlwelle ermöglicht.

## Claims

1. Apparatus for the thermal treatment of divided solids, comprising at least one feeding member (17) having a longitudinal axis (X) and a helical portion (18) which is mounted to rotate on said longitudinal axis in a tubular envelope (11), said helical portion (18) having a heating surface to allow it to form a heating feeding means, **characterised in that** the tubular envelope (11) has inner walls (41, 42) made of refractory material, and the helical portion (18) of the feeding member (17) is formed throughout from an electrically conductive material and is connected to at least one source for supplying electrical energy, said helical portion thus also forming a means for heating the inner walls (41, 42) to a temperature sufficient for said inner walls themselves to form at least part of the means for heating by radiation the mass of divided solids which makes its way through said tubular envelope (11).

2. Apparatus according to claim 1, **characterised in that** the inner walls (41, 42, 43) made of refractory material comprise both the top lid-forming wall (41), the side-walls (42), and the bottom wall and floor (43) of the tubular envelope (11), certain of said inner walls thus also forming at least part of the means for heating by conduction and/or convection the mass of divided solids moving along in said tubular envelope.

3. Apparatus according to claim 1 or claim 2, **characterised in that** the inner walls (41, 42, 43) made of refractory material cover the entire length of the tubular envelope (11) and also include the upstream and downstream end-walls (44) of said tubular envelope.

4. Apparatus according to one of claims 1 to 3, **characterised in that** the tubular envelope (11) comprises a unit outer envelope (13) of U-shaped cross-section in which are arranged modules (40.1, 40.2) made of refractory material, likewise of U-shaped cross-section, which are juxtaposed end to end, each individual module thus forming an inner wall and floor element (43) and two inner-wall side elements (42).

5. Apparatus according to claim 4, **characterised in that** the tubular envelope (11) is covered for its entire length by a lid formed by top-wall elements (41) made of refractory material which are juxtaposed end to end, and by covering elements (45) made of thermally insulating material.

6. Apparatus according to claims 4 and 5, **characterised in that** the lid (41, 45) and the floor (43) of the tubular envelope (11) are fitted with duct elements (48, 49, 50) made of refractory material which are intended to be connected to sealed upstream means (58) for the admission of products to be treated and sealed downstream means (59) for treated products, and possibly also to sealed downstream means (60) for discharging gaseous byproducts

7. Apparatus according to one of claims 1 to 6, **characterised in that** the inner walls (41, 42, 43, 44) of the tubular envelope (11) are all made from a material which is both refractory and electrically insulating.

8. Apparatus according to claim 7, **characterised in that** said at least one source of electrical energy (22) supplying the heating feeding member (17) is arranged in a ventilated enclosure (14) adjacent to the tubular envelope (11), with a thermally insulating wall (36) interposed.

9. Apparatus according to claim 8, **characterised in that** the or each ventilated enclosure (14) has passing through it a driven shaft (20) which is connected coaxially to the feeding member (17), said driven shaft (20) carrying cooling vanes (30).

10. Apparatus according to claim 9, **characterised in that** the or each ventilated enclosure (14) is equipped with a lateral blower or fan (31) arranged to blow cold air towards the cooling vanes (30), and has a lateral aperture (32) opposite said blower or fan.

11. Apparatus according to claim 9, **characterised in that** the driven shaft (20) is a hollow shaft which is connected, outside the ventilated enclosure (14), to a rotating connector (29) which enables a cooling fluid to be circulated inside said hollow shaft.
